# EUROPÄISCHE PATENTSCHRIFT

(11) **EP 1 016 264 B1**
(45) Veröffentlichungstag und Bekanntmachung des Hinweises auf die Patenterteilung: **27.11.2002**
(21) Anmeldenummer: 98954171.9
(22) Anmeldetag: 14.09.1998
(51) Int. Cl.: H04M 15/00, H04Q 7/22

(54) **VERFAHREN ZUR REGIONAL ABHÄNGIGEN VERGEBÜHRUNG VON MOBILFUNK-DIENSTLEISTUNGEN**
METHOD FOR CHARGING MOBILE RADIOTELEPHONE SERVICES BY REGIONS
PROCEDE DE TAXATION, FONCTION D'UN SECTEUR REGIONAL, DE PRESTATIONS DE SERVICE EN RADIOTELEPHONIE MOBILE

(30) Priorität: 19.09.1997 DE 19741327
(43) Veröffentlichungstag der Anmeldung: 05.07.2000
(73) Patentinhaber: T-Mobile Deutschland GmbH, 53227 Bonn (DE)
(72) Erfinder: LJUNGSTRÖM, Patrik, D-53639 Königswinter-Heisterbacherott (DE)
(74) Vertreter: Riebling, Peter, Dr.-Ing.
(86) Internationale Anmeldenummer: DE9802712
(87) Internationale Veröffentlichungsnummer: WO99016231

(56) Entgegenhaltungen:
- WO-A-96/20570
- WO-A-97/08884
- WO-A-97/11569
- US-A- 5 568 153
- US-A- 5 600 706

## Beschreibung

Die vorliegende Erfindung betrifft die Vergebührung von Mobilfunk-Dienstleistungen (z.B. Telefonie, Anrufbeantworter, Informationsdienste etc.), insbesondere von Verbindungen zu anderen Mobilfunkteilnehmern oder Festnetzteilnehmern. Neben einer rein pauschalen Vergebührung pro abgerufener Dienstleistung bzw. pro Zeiteinheit der dafür notwendigen Zeit sind auch andere Vergebührungsszenarien denkbar. Einerseits sind entfernungsabhängige Tarife denkbar, wie sie bereits im Festnetz vorgesehen sind. Alternativ dazu wird eine regional abhängige Vergebührung (Regional Charging) vorgeschlagen.

Aus der WO-A-97/08884 ist ein Verfahren zur regional abhängigen Vergebührung in zellularen Mobilfunknetzen bekannt, bei dem eine Anzahl von Abrechnungsregionen mit zugeordneten, speziellen Abrechnungstarifen individuell für jeden Teilnehmer des Mobilfunknetzes definiert werden. Die speziellen Abrechnungsregionen entsprechen jeweils einer oder mehreren Funkzellen, wobei der spezielle Abrechnungstarif immer dann angewandt wird, wenn sich der Teilnehmer in einer für ihn definierten speziellen Abrechnungsregion aufhält. Nachteilig hierbei ist, daß bei Änderungen in der Zellenstruktur des Mobilfunknetzes eine entsprechende Anpassung der Abrechnungsregionen notwendig wird. Eine spezielle Kennung zur Kennzeichnung der Abrechnungsregionen wird nicht verwendet, vielmehr stimmen die Abrechnungsregionen mit einer oder mehreren Funkzellen überein.

Die US-A-5 568 153 betrifft ein Verfahren zur Einrichtung und Verwaltung von persönlichen Heimatregionen für Teilnehmer eines zellularen Mobilfunknetzes, wobei in diesen Heimatregionen spezielle Konditionen für den Teilnehmer gelten. Jede Heimatregion entspricht der Fläche eines Kreises der durch die geographische Koordinaten seines Mittelpunktes sowie einen vorgegebenen Radius definiert wird. Eine spezielle Kennung zur Kennzeichnung der Heimatregionen wird nicht verwendet, sondern die Koordinaten der Heimatregionen werden im Heimatregister gespeichert.

Aufgabe der vorliegenden Erfindung ist es, eine regional abhängige Vergebührung abgerufener Dienstleistungen in einem Mobilfunknetz bereitzustellen, die im wesentlichen unabhängig vom Funknetzausbau ist und bei der die Verwaltung der teilnehmerindividuellen Heimatregionen effizient ausgeführt ist.

Diese Aufgabe wird durch die Merkmale des Patentanspruchs 1 gelöst.
Die beschriebene Lösung greift vorzugsweise auf Funktionen eines Intelligenten Netzwerkes (IN) zurück.

Es werden in Mobilfunk-Netzgebiet Aufenthaltsregionen definiert. Dabei können unterschiedliche Klassen von Regionen definiert werden, die sich in unterschiedlichen Vergebührungsarten niederschlagen können. Der Einfachheit halber wird im folgenden von lediglich zwei Klassen ausgegangen, von Heimatregionen und übrigen Regionen.
Beansprucht werden jedoch auch allgemeinere Ausgestaltungen der Klassifizierungen.

Für einen Kunden mit einem Regional Charging Vertrag wird eine Heimatregion definiert. Alle Gespräche die der Kunde führt, während er sich im Bereich seiner Heimatregion aufhält, werden mit einem anderen Tarif vergebührt (typischerweise billiger als Gespräche außerhalb der Heimatregion), als seine Gespräche aus anderen Regionen des Netzes.

Als Heimatregionen werden Heimzonen festgelegt, die durch geographische Punkte definiert sind. Bevorzugt werden die Eckpunkte von Polygonzügen festgelegt, die dann eine Heimzone bilden. Die Festlegung bzw. Speicherung der Daten zur Definition der Heimzonen erfolgt bevorzugt in einem IN-System. Die Zonen sind z.B. rechteckig und werden durch geographische Koordinaten von mindestens zwei der Eckpunkte (beispielsweise der nordwestliche Eckpunkt und der südöstliche Eckpunkt) definiert. Die Heimzonen können sich grundsätzlich überlappen.
Jeder Heimzone wird jeweils eine spezielle Regionalkennung für abgehende Gespräche zugeordnet. Diese Regionalkennung wird teilnehmerindividuell im Heimatregister des Teilnehmers HLR gespeichert und bei Bedarf in die aktuelle Besucherdatei VLR für den momentanen Aufenthaltsort des Teilnehmers übertragen. Baut der Teilnehmer eine Verbindung zum Mobilfunknetz auf, um Dienstleistungen des Netzes in Anspruch zu nehmen, z.B. um einen anderen Teilnehmer anzurufen, so wird die Verbindung zum Mobilfunknetz durch die in den Verbindungsdaten enthaltene Regionalkennung gekennzeichnet als eine Verbindung, die regional zu vergebühren ist. Wird diese Regionalkennung in den Verbindungsdaten durch eine entsprechende Erkennungseinrichtung, beispielsweise ein intelligentes Netzwerk IN, erkannt, so werden die Verbindungsdaten an eine Vergleichseinrichtung weitergeleitet. Im Falle eines IN-Systems kann die Vergleichseinrichtung im IN-System integriert sein.
Zur Auswertung werden dann, ausgelöst durch das Erkennen der Regionalkennung in den Verbindungsdaten, auch die netzseitig standardmäßig vorliegenden geographischen Daten über den Aufenthaltsort des Teilnehmers herangezogen und eingelesen. Anschließend wird die Regionalkennung sowie der Aufenthaltsort des Teilnehmers ausgewertet. Die Regionalkennung hat somit eine doppelte Funkion, einmal zur Kennzeichnung der Verbindung als Verbindung, die nach Regional Charging zu vergebühren ist, zum anderen als Information, welche Heimzone der Teilnehmer besitzt. Ergibt die Auswertung, daß der Aufenthaltsort des Teilnehmers innerhalb der zu der Regionalkennung gehörigen Heimzone liegt, so werden für die aufzubauende Verbindung zur Inanspruchnahme der Mobilfunk-Dienstleistung Vergebührungsdaten derart angelegt, daß eine Vergebührung zu einem Regionaltarif erfolgt.

Als Aufenthaltsort des Teilnehmers kann als grobe Vereinfachung die geographische Lage der Aufenthaltszelle verwendet werden, wobei z.B. auf die in der Verbindung zum Mobilfunknetz enthaltene Basisstationskennung zurückgegriffen werden kann, die sich auf geographische Koordinaten umsetzen läßt. Eine solche Umsetzung ist sehr einfach und schnell z.B. anhand geographischer Daten der Basisstationen möglich, die in den Vermittlungsstellen des Mobilfunknetzes gespeichertert sind.

Prinzipiell könnte auch die Zell-Kennung bzw. Basisstationskennung direkt als Regionalkennung zur Festlegung einer Heimzone verwenden werden. Allerdings ist dann bei Änderungen in der Zellenstruktur des Netzes eine entsprechende Anpassung der Regionalkennungen nötig. Werden aber die Heimzonen geographisch festgelegt so kann diese Festlegung unabhängig von Änderungen in der Netzstruktur beibehalten werden. Es ist lediglich eine Abbildung des Aufenthaltsortes des Teilnehmers auf Heimzonen nötig, die wie oben beschrieben sehr einfach erfolgen kann.

Bei: der bevorzugten Lösung ist somit eine Entkoppelung von Funknetzausbau und der Regional Charging Realisierung gegeben. Im einzelnen bedeutet dies, daß neue Zellen in Betrieb genommen werden können, ohne daß die globalen Daten des Regional Charging Dienstes angepaßt werden müssen.

Zusätzlich kann vorgesehen werden, daß nicht nur festgestellt wird, ob der Anrufer sich im Bereich seiner Heimzone aufhält, sondern auch die Entfernung zum Zielteilnehmer ermittelt wird, beispielsweise anhand von Informationen über die momentane Aufenthaltszelle des angerufenen Teilnehmers bzw. der Ortsnetzkennzahl des angerufenen Teilnehmers. Als Ergebnis kann dann eine entfernungsbhängige Vergebührungsinformation erstellt und an die entsprechenden Vergebührungsstellen des Netzes geleitet werden.

Sind die entsprechenden Vergebührungsdaten erstellt, so erfolgt der weitere Verbindungsaufbau zu dem gewünschten Mobilfunkdienst, z.B. der Gesprächsaufbau zu einem angerufenen Teilnehmer. Die Vergebührungssituation ist somit bereits vor dem endgültigen Verbindungsaufbau geklärt und entsprechend eingerichtet.
In der vorgenannten Ausprägung von Regional Charging wird pro Heimzone eine Regionalkennung vergeben. In diesem Fall erfolgt in der Vergleichseinrichtung eine Auswertung, ohne daß auf individuelle Teilnehmerdaten Bezug genommen wird. Es können jedoch auch die Heimzonen teilnehmerindividuell in der Vergleichseinrichtung vorliegen. In diesem Fall würde zur Vereinfachung jede entsprechende Regional Charging Verbindung durch eine einheitliche Kennung gekennzeichnet, die dann zu einer Weiterbehandlung der Verbindung durch die Vergleichseinrichtung führt. Dort werden dann die Teilnehmerkennungen der Verbindungsdaten sowie Informationen über den Aufenthaltsort des Teilnehmers ausgewertet und mit vorliegenden Daten über die Heimzone des speziellen Teilnehmers verglichen. Dies kann wiederum bevorzugt durch ein IN-System erfolgen.

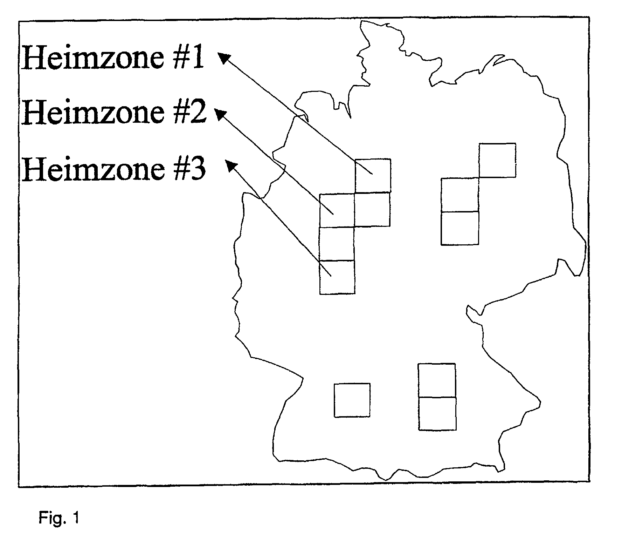

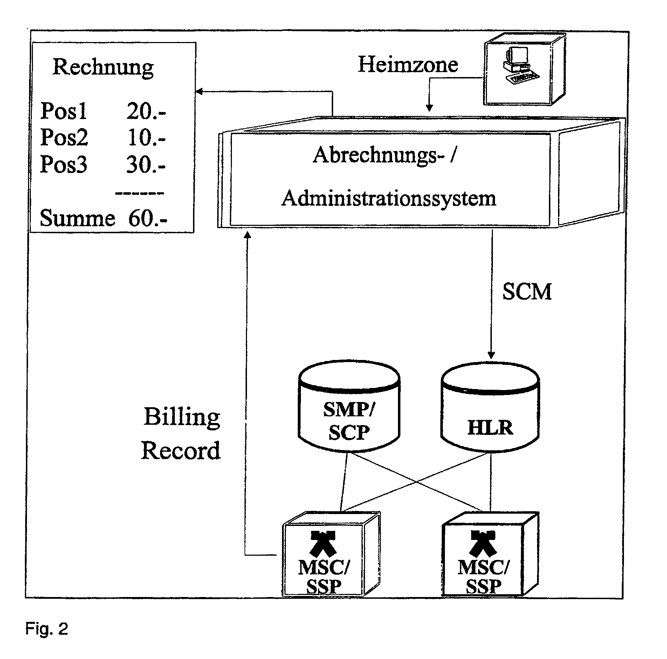

Anhand der figuren 1 bis 3 wird im folgenden ein spezielles Ausführungsbeispiel der Erfindung erläutert.
Es zeigen
Fig. 1 Eine exemplarische Anordnung von Heimzonen im Gebiet der Bundesrepublik Deutschland
Fig. 2 eine erfindungsgemäße Systemarchitektur
Fig. 3 eine erfindungsgemäßer Gesprächsablauf

Die Festlegung bzw. Speicherung der Daten zur Definition der Heimzonen erfolgt bevorzugt in dem IN System (SCP/SMP). Jeder Heimzone wird jeweils als spezielle Kennung ein IN-Trigger für abgehende Gespräche, ein sogennannter Mobile Originating Call Service Class Mark (MOC-SCM), zugeordnet. Der SCM wird teilnehmerindividuell im HLR gespeichert und in das aktuelle VLR des Kunden übertragen.
Am Verkaufsort Point of Sale (POS), d.h. bei dem Händler, bei dem der Teilnehmer ein Teilnehmerverhältnis begründet oder ändert, wird die Heimzone des Teilnehmers eingegeben. Dies kann entweder direkt in Form des relevanten SCM-Werts oder in Form eines netzunabhängigen Parameters erfolgen. Sofern die SCM nicht direkt eingegeben wird, wird im Administrationssystem eine Tabelle zur Ermittlung des relevanten SCM-Werts benötigt. Die SCM wird über entsprechende Verwaltungseinrichtungen (Mediaten Devices) im HLR eingerichtet.
Eine kundenindividuelle Administration im IN-System (SCP/SMP) ist nicht notwendig, da alle Heimzonen als Globale Daten für die Regional Charging Kunden einmalig eingerichtet werden.

Durch Erkennen eines MOC-SCM in einem abgehenden Gespräch vom Teilnehmer aus wird für dieses Gespräch ein IN-Dialog zum IN-System eingeleitet.
Da in der ersten Nachricht des IN-Dialogs auch die SCM des Kunden und die geographischen Koordinaten der Ursprungszelle übertragen werden, kann im IN-System ein Vergleich zwischen Heimzone und Ursprung stattfinden.

Durch den IN-Dialog bei allen abgehenden Gesprächen kann eine Zusatzinformation in die Vergebührungsdaten (Billing Records) dieser abgehenden Gespräche geschrieben werden. Diese Möglichkeit wird auch für Regional Charging verwendet. Nach dem Vergleich der zum SCM-Wert gehörenden Heimzone mit der Ursprungsinformation (Location Number) wird das Ergebnis in Form eines einfachen Parameters (Heimzone ja/nein) in das Billing Record geschrieben und an das Abrechnungssystem weitergeleitet. Es besteht damit keine Notwendigkeit, im Abrechnungssystem Informationen z.B. über Erkennung oder Lage von Heimzonen zu führen. Das Abrechnungssystem kann weitgehend unverändert bleiben. Aufgrund des Parameters (Heimzone ja/nein) über die Anwendung von Regional Charging werden Gespräche, die aus der Heimzone geführt wurden, lediglich mit einem anderen Tarifmodell bewertet.

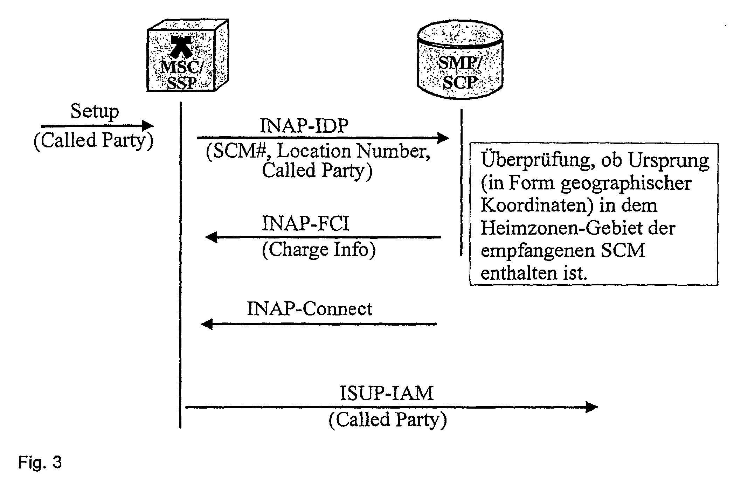

In Fig. 3 ist der Gesprächsverlauf für einen Teilnehmer mit Regional Charging Vertrag dargestellt. Aus der Signaliserung mit der Mobilstation ist für die Vermittlungseinrichtung MSC bekannt, in welcher Zelle der rufende Teilnehmer sich beim Aufbau des Gesprächs befindet. In der MSC wird diese Zell-Information in die geographischen Koordinaten der Zelle umgewandelt. Dies erfolgt anhand einer generellen MSC-Tabelle die auch für andere Dienste verwendet wird.
Durch das Erkennen der MOC Service Class Mark durch das VLR wird ein IN-Dialog zum zuständigen IN-System (SCP/SMP) initiiert. Die Initial-DP Operation enthält u.a. die geographischen Koordinaten in Form der Location Number, die SCM und die Zielrufnummer (Called Party).

Nach dem Vergleich der zum SCM-Wert gehörenden Heimzone mit der Location Number (geographische Koordinaten) wird das Ergebnis mittels einer entsprechenden Gebühreninformationsoperation (Furnish Charging Information FCI Operation) in den Billing Record geschrieben. (Eventuell kann bei einem negativen Ergebnis - d.h. der Kunde ist nicht in seiner Heimzone - auf die FCI Operation, und somit auf Modifikationen im Billing Record verzichtet werden.)
Das Gespräch wird anschließend mit dem Verbindungsaufbau (Connect Operation) fortgesetzt und zum Zielteilnehmer aufgebaut.

## Patentansprüche

1. Verfahren zur regional abhängigen Vergebührung von Mobilfunk-Dienstleistungen in Mobilfunknetzen mit Teilnehmerendgeräten, wobei im Mobilfunk-Netzgebiet Aufenthaltsregionen festgelegt werden, und ein Vergleich erfolgt, ob der Aufenthaltsort eines Teilnehmers innerhalb der definierten Aufenthaltsregionen liegt, wobei zutreffendenfalls anhand von vordefinierten regionalen Vergebührungsinformationen regional abhängige Vergebührungsdaten erstellt werden,
**dadurch gekennzeichnet,**
**daß** den Aufenthaltsregionen Kennungen zugeordnet werden, die teilnehmerindividuell im Heimatregister des Teilnehmers gespeichert werden, und
**daß** regional abhängig zu vergebührende Verbindungen zu Mobilfunk-Dienstleistungen durch die Kennung in den Verbindungsdaten gekennzeichnet werden, indem die Kennung beim Verbindungsaufbau übertragen wird, wobei ausgelöst durch ein Erkennen der Kennung eine Erfassung des Aufenthaltsortes des Teilnehmers erfolgt, wobei die Kennung angibt, welche Heimzone der Teilnehmer besitzt.

2. Verfahren nach Anspruch 1,
**dadurch gekennzeichnet,**
**daß** die Kennung eine von den Aufenthaltsregionen abhängige Regionalkennung darstellt.

3. Verfahren nach Anspruch 1,
**dadurch gekennzeichnet,**
**daß** die Kennung eine einheitliche Kennung für regional abhängige Vergebührung darstellt.

4. Verfahren nach einem der Ansprüche 1 - 3,
**dadurch gekennzeichnet,**
**daß** das Vorhandensein der Kennungen in den Verbindungsdaten für die einzelnen Teilnehmer individuell festgelegt wird.

5. Verfahren nach einem der Ansprüche 1 - 4,
**dadurch gekennzeichnet,**
**daß** eine gebührenrelevante Klassifizierung der Aufenthaltsregionen erfolgt.

6. Verfahren nach einem der Ansprüche 1 - 5,
**dadurch gekennzeichnet,**
**daß** der Aufenthaltsort des Teilnehmerendgerätes über die geographische Lage der das Endgerät versorgenden Feststation ermittelt wird.

## Claims

1. Method for regionally dependent charging for mobile radio services in mobile radio networks with subscriber terminals, in which location regions are defined in the mobile radio network region and a comparison is carried out to determine whether the location of a subscriber is within the defined location regions, and in which, if appropriate, regionally dependent charging data is produced on the basis of predefined regional charging information,
**characterized**
**in that** the location regions are associated identifiers which are stored on a subscriber-specific basis in the home location register of the subscriber, and
**in that** connections which are to be charged on a regionally dependent basis for mobile radio services are identified by the identifier in the connection data in that the identifier is transmitted when setting up the connection, in which the location of the subscriber is recorded, initiated by identification of the identifier, and with the identifier indicating the subscriber's home zone.

2. Method according to Claim 1,
**characterized**
**in that** the identifier represents a regional identifier which is dependent on the location regions.

3. Method according to Claim 1,
**characterized**
**in that** the identifier represents a standard identifier for regionally dependent charging.

4. Method according to one of Claims 1 - 3,
**characterized**
**in that** the presence of the identifiers in the connection data is defined individually for the individual subscribers.

5. Method according to one of Claims 1 - 4,
**characterized**
**in that** the location regions are classified on a charge-relevant basis.

6. Method according to one of Claims 1 - 5,
**characterized**
**in that** the location of the subscriber terminal is determined via the geographical position of the fixed station which is supplying that terminal.

## Revendications

1. Procédé de taxation en fonction de la région, de prestations de service en téléphonie mobile dans des réseaux de téléphonie mobile qui comprennent des terminaux d'abonnés, dans lequel des régions de séjour sont déterminées dans le domaine du réseau de téléphonie mobile et il s'effectue une comparaison pour déterminer si le lieu de séjour d'un abonné se trouve dans les régions de séjour définies, et dans lequel, dans l'affirmative, des données de taxation en fonction de la région sont établies sur la base d'informations de taxation régionale préalablement définies,
**caractérisé**
**en ce qu'**aux régions de séjour sont associés des codes qui sont mémorisés individuellement pour chaque abonné dans l'index domiciliaire de l'abonné,
**en ce que** des communications appartenant à des prestations de service de téléphonie mobile et qui doivent être taxées en fonction de la région sont **caractérisées par** le code contenu dans les données de communication par le fait que le code est transmis lors de l'établissement de la communication, la reconnaissance du code déclenchant un relevé du lieu de séjour de l'abonné, le code indiquant quelle est la zone domiciliaire de l'abonné.

2. Procédé selon la revendication 1,
**caractérisé**
**en ce que** le code représente un code régional fonction des régions de séjour.

3. Procédé selon la revendication 1,
**caractérisé**
**en ce que** le code représente un code unique pour la taxation en fonction de la région.

4. Procédé selon une des revendications 1 - 3,
**caractérisé**
**en ce que** la présence des codes dans les données de communication est déterminée individuellement pour les différents abonnés.

5. Procédé selon une des revendications 1 - 4,
**caractérisé**
**en ce qu'**il s'effectue une classification des régions de séjour qui est pertinente pour la taxe.

6. Procédé selon une des revendications 1 - 5,
**caractérisé**
**en ce que** le lieu de séjour du terminal de l'abonné est déterminé par l'intermédiaire de la situation géographique de la station fixe qui dessert le terminal.
